# EUROPEAN PATENT APPLICATION

(11) **EP 0 940 245 A2**
(43) Date of publication of application: **08.09.1999**
(21) Application number: 99850012.8
(22) Date of filing: 29.01.1999
(51) Int. Cl.: B31B 7/60, B31B 7/44, B31B 43/00

(54) **Method and production machine for the manufacture of packaging containers**

(30) Priority: 03.02.1998 SE 9800302
(71) Applicant: AB AKERLUND & RAUSING, S-221 00 Lund (SE)
(72) Inventor: Hagelqvist, per, 222 29 Lund (SE); Holmberg, Yngve, 268 00 Svalöv (SE)
(74) Representative: Graudums, Valdis

(57) **Abstract**

The invention relates to a method and production machine for the manufacture of packagings comprising an inner part and an outer part, of the so-called table packaging type. The method includes joining together a relaxed, thermoformed inner part and an outer part blank in a female mould arrangement or a male mould arrangement.

The joining together is effected by an adhesive substance between the inner part and the outer part, and the final joining together takes place by the adhesive substance being activated to join together the inner part and the outer part only when one of these has been made to take on, in terms of format, the shape of the inside of a female mould or the outside of a male mould.

## Description

### FIELD OF THE INVENTION

The invention relates to packaging containers and specifically to a method and production machine for the manufacture of containers comprising an outer and an inner part, where the inner part is made from thermoformable material.

### STATE OF THE ART

So-called table packagings manufactured from a thermoformed plastic insert and an outer tray made of cardboard material or equivalent, which provides the stability of the packaging and bears the decoration, have been known for a long time.

High-capacity production lines have been developed for the rational manufacture of such packagings. Pre-printed, punched cardboard blanks intended to form the outer part of the packaging are guided down into female moulds in a number of forming tools which are advanced intermittently and in a parallel manner. A continuous plastic web is fed to a thermoforming station and tools in this station form the web down into the cardboard blanks erected in the female moulds.

The cardboard blanks are usually placed into the female moulds with their side walls not connected to one another and are joined together with the inner trays by activation of a bonding agent applied over the entire surface or in places, or by activation of the outside of the plastic insert or altematively a coating on the latter.

According to the known art, such thermoforming is effected directly down into the female moulds, in each of which a cardboard blank is erected.

The coating of bonding agent on the cardboard blank must be of the rapidly activable type in order that high-efficiency production is possible. In practice, this means that use is usually made of bonding agents of the hot-melt type, which bond together virtually instantaneously the thermoformed plastic insert and the cardboard part when these are joined together.

The material stresses that arise in the plastic material during thermoforming and in principle remain in the newly joined-together packaging container will, as the container assumes normal ambient conditions (temperature and pressure), be completely or partly released. Remaining material stresses can be released, for example, if transported at elevated temperature or in the event of hot-filling.

When this takes place, the outer part of the packaging is acted on by deforming forces which arise at the connection points between the inner tray and the outer part.

The effect of these deforming forces can be reduced or eliminated by sturdy dimensioning of the cardboard material. However, this involves an increase in the cost of material which is difficult to justify for a disposable product of the type in question.

Another known way of reducing deformation of the outer part of the packaging is to apply the bonding agent in unobtrusive areas which are selected in such a manner that, between adjacent areas of bonding agent, the deforming forces act on the outer part where it is strongest, for example in the corners.

However, such a procedure sometimes also requires the material of the outer part to be over-dimensioned in relation to the function actually intended, which is to provide a packaging container consisting of an outer part and an inner part and made stable by joining together.

The problem of deformation of the outer part, the outer tray, becomes especially marked when it is desirable to manufacture the inner part of the packaging from material which allows hot-filling of product, especially as such material often has great shrinkage stresses after thermoforming.

Typical examples of such a material are polypropylene and a number of equivalent thermoplastic materials.

### THE OBJECT OF THE INVENTION

The object of the invention is to provide a method and production machine which eliminate the above-mentioned shortcomings of the known manufacturing methods and production machines respectively.

### THE SOLUTION TO THE PROBLEM ACCORDING TO THE INVENTION

The problem according to the invention is generally solved by the methods indicated in Claims 1 and 2.

In-line production is achieved using the method in Claim 3 and, respectively, the production machine in Claims 11-13.

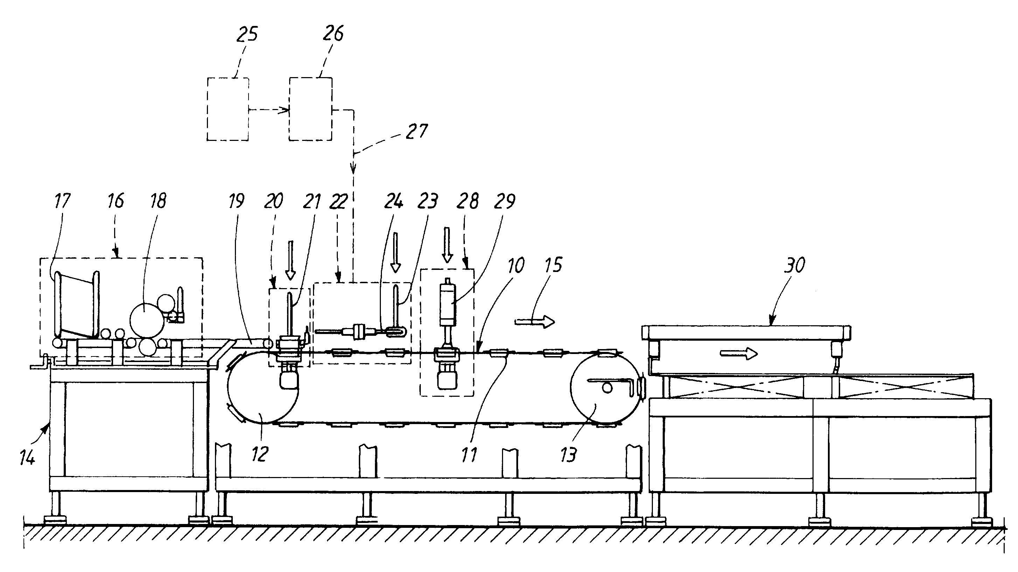

### BRIEF DESCRIPTION OF THE FIGURE OF THE DRAWING

The sole appended drawing figure shows diagrammatically an exemplary embodiment according to the invention of a production line for the manufacture of packaging containers of the table packaging type. An intermittently operating conveyor 10, which in the exemplary embodiment supports a number of female moulds 11, each of which has an inner shape corresponding to the assembled packaging container to be manufactured, is advanced horizontally in the form of an endless web around two rollers 12, 13, one of which is a driving roller. The conveyor is supported by a stand 14, on which a number of work stations are arranged in front of, along, across and following the conveyor in its direction of transport 15.

At the entrance to the conveyor, there is a station 16 which comprises a magazine 17 for blanks made of cardboard or equivalent which are intended to form the outer part or outer tray of the assembled packaging, each of these blanks usually comprising a bottom panel and side wall panels connected thereto. The station 16 also includes an applicator 18 for applying bonding agent (adhesive substance) to the individual blanks in a suitable pattern. In a preferred embodiment, application of the adhesive substance is carried out in such a manner that the adhesive substance provides the finished packaging container with the necessary stability during filling and handling but at the same time allows separation of the inner part and the outer part by hand after the product in the container has been consumed.

A feed arrangement 19, provided with, for example, a gripping arrangement operating by means of negative pressure, transfers individual blanks to a station 20 at the entrance to the conveyor. The station 20 contains a ram arrangement 21, by means of which individual cardboard blanks, or a number of blanks fed in a parallel manner by the feeder 19, are placed into corresponding female moulds 11 on the conveyor 10. The feed is effected in such a manner that the cardboard blank is erected in a shape close to the final shape the container is intended to have after it leaves the manufacturing machine. In the preferred exemplary embodiment, the individual blanks are erected with their side walls not connected to one another. These outer part blanks erected in this way are then indexed to a feeder station 22 which performs the placing of thermoformed inserts or inner parts into the female moulds 11 indexed forward in one or more rows by the conveyor. The feeder 22 contains a ram arrangement 23 which pushes thermoformed inner parts carried by a rotatable carousel arrangement 24 down to a female mould or female moulds, with outer part blanks erected therein, located under the ram arrangement.

These inner parts are manufactured in a thermoforming station 25 (shown diagrammatically), in which web-shaped thermoplastic material, for example polypropylene, is formed into individual inner parts for the assembled packaging container. The newly formed inner parts are fed from the thermoforming station to a buffer arrangement 26 which is adapted in such a manner with regard to temperature and dwell time for individual thermoformed inner parts that at the exit 27 from the buffer arrangement, that is to say to the feeder 22, inner parts are obtained, in which material stresses brought about by thermoforming have essentially been eliminated, that is to say the inner parts have been relaxed. The shrinkage tendency of the individual inner parts is thus virtually eliminated when they arrive at the feeder 22 to be pushed down by the ram arrangement 23 into outer part blanks erected in female moulds 11.

The adhesive substance which is applied to these cardboard blanks is, for example, of the type of cold-sealing substance which is activable by pressure and elimination of water content. In the feeder station 22, this adhesive substance has not been activated to such an extent that the outer part and the inner part are joined together in their final permanent state.

In a pressing station 28 following the feeder station 22, the final connection of the inner part and the outer part is effected by means of a ram arrangement 29 which is centred in relation to the respective female mould 11, brings about a compressive force and, in addition to carrying out mechanical compression, preferably also has an arrangement for, by means of a pressure medium, pressing the thermoformed, relaxed inner part together with the outer part, and in particular its side walls which are not connected to one another, against the inside of the female mould, that is to say its inner shape which corresponds to the shape of the final packaging container. As a result of this pressing, the outer part is "lined" up around the relaxed inner part simultaneously with the activation of the adhesive substance for the purpose of permanent connection of the inner part and the outer part.

The finished packaging containers are then fed out to a feed-out and buffer table 30 and are delivered to the purchaser, or for filling with product in direct association with the production line.

A single specific embodiment of the invention has been described but the intention is that alternative and, respectively, equivalent embodiments are to be included within the scope of the appended patent claims. It is therefore possible, for example, instead of female moulds intended for the outer parts of the container, to use the opposite arrangement, that is to say holders of the male mould type, on which, in the production line and, respectively, during implementation of the method, thermoformed, relaxed inner parts are supported, on which cardboard blanks intended to form the outer part are "lined" by means of clamping jaws or equivalent arranged as an alternative to the ram arrangement in the work station 28 shown in the drawing.

Although it has been indicated in the exemplary embodiment that the adhesive substance is applied to the cardboard blank forming the outer part, in certain applications the opposite can apply, that is to say an adhesive substance is applied to the relaxed, thermoformed inner part before the parts are finally joined together.

In the exemplary embodiment, a thermoforming station 25 with a buffer arrangement 26 has been shown in direct association with the production line but, as an alternative, it is also conceivable that the thermoforming does not have to be carried out in direct association with the production line.

## Claims

1. Method for the manufacture of dimensionally stable packaging containers consisting of an inner part and an outer part, where the inner part comprises plastic material and is thermoformed to form an inner container and the outer part comprises cardboard material or equivalent, characterized in that the inner part is thermoformed in a thermoforming machine, in that material stresses brought about in the inner part by thermoforming are relaxed, in that an adhesive substance is applied to an outer part blank and/or the inner part in a predetermined pattern, in that the outer part blank is guided down into a female mould with an inner shape corresponding to the shape of the packaging container to be manufactured, in that a relaxed inner part is guided down into said female mould, and in that the relaxed inner part and the outer part are joined together in the female mould by activation of said adhesive substance.

2. Method for the manufacture of dimensionally stable packaging containers consisting of an inner part and an outer part, where the inner part comprises plastic material and is thermoformed to form an inner container and the outer part comprises cardboard material or equivalent, characterized in that the inner part is thermoformed in a thermoforming machine, in that material stresses brought about in the inner part by thermoforming are relaxed, in that an adhesive substance is applied to an outer part blank and/or the inner part in a predetermined pattern, in that the relaxed inner part is supported on a male mould with a shape corresponding to the inner shape of the packaging container to be manufactured, and in that the relaxed inner part and the outer part are joined together on the male mould by activation of said adhesive substance.

3. Method for the in-line manufacture of dimensionally stable packaging containers consisting of an inner part and an outer part, where the inner part comprises plastic material and is thermoformed to form an inner container and the outer part comprises cardboard material or equivalent, characterized in that the inner part is thermoformed in a thermoforming station (25), in that material stresses brought about in the inner part by thermoforming are relaxed in a buffer zone (26), in that an adhesive substance is applied to an outer part blank in a predetermined pattern in an applicator station (12), in that the outer part blank with adhesive applied is guided down into a female mould (11) with an inner shape corresponding to the shape of the packaging container to be manufactured, in that a relaxed inner part is guided down into said female mould, and in that the relaxed inner part and the outer part are joined together in the female mould by activation of said adhesive substance.

4. Method according to Claim 3, characterized in that the relaxation in the buffer zone (26) is effected by the thermoformed inner part remaining in the buffer zone at a predetermined temperature for a period of time which is sufficient to eliminate shrinkage stresses that have arisen.

5. Method according to Claim 4, characterized in that a cold-sealing bonding agent is selected as the adhesive substance.

6. Method according to Claim 5, characterized in that the outer part comprises bottom and side wall panels and is erected, with its side walls not connected to one another, in said female mould in an erecting station (20).

7. Method according to Claim 6, characterized in that the female mould with the outer part erected is indexed to a feeder station (22), and in that the relaxed inner part is placed into the outer part in this station.

8. Method according to Claim 7, characterized in that the female mould with, placed in it, the outer part and the inner part is indexed to a pressing station (28), and in that there, by means of an arrangement (29) exerting compressive force, the relaxed inner part is pressed against the outer part, the side walls of which are free in relation to one another, until this takes on, in terms of format, the inner shape of the female mould, and the pressure brought about on the adhesive substance then fixes the side walls in the shape corresponding to the interior of the female mould.

9. Method according to Claim 8, characterized in that the compressive force is brought about by a ram and/or an arrangement (29) supplying pressure medium, which is centred in relation to the female mould.

10. Method according to one or more of the preceding claims, characterized in that the adhesive substance is applied in such a pattern and/or quantity that the inner part and the outer part are held together in a stable manner during filling and handling of the packaging but allow separation by hand after consumption of the contents of the packaging.

11. Production machine for the in-line manufacture of dimensionally stable packaging containers consisting of an inner part and an outer part, where the inner part comprises plastic material and is thermoformed to form an inner container, characterized by a thermoforming station (29) for forming the inner part, by a buffer zone (26) following the thermoforming station for temporary storage and relaxation of material stresses in the inner part, by an applicator station (18) for applying an adhesive substance in a predetermined pattern to an outer part blank and/or the inner part, by a female mould arrangement (11) with an inner shape corresponding to the shape of the packaging container to be manufactured, by an arrangement (20; 22) for feeding and erecting a cardboard blank in the female mould arrangement and placing the relaxed inner part into the erected blank, and by an arrangement (28) for activating the adhesive substance for the purpose of joining together the inner part and the outer part.

12. Production machine according to Claim 11, characterized in that the feeder arrangement has means (21) for erecting the outer part blank in the female mould with its side walls not connected to one another.

13. Production machine according to Claim 11, where the female mould arrangement is exchanged for a male mould arrangement which has means for supporting the relaxed inner part, and where an erecting arrangement for the outer part blank is arranged around the male mould and has means for pressing the outer part blank against the inner part supported by the male mould for the purpose of activating the adhesive substance.

14. Production machine for the manufacture of dimensionally stable packaging containers consisting of an inner part and an outer part, where the inner part comprises plastic material and is thermoformed to form an inner container, characterized by a female mould arrangement or male mould arrangement with a shape corresponding to the shape of the packaging container to be manufactured, by an arrangement for feeding and erecting a cardboard blank in the female mould arrangement or the male mould arrangement and application of a relaxed inner part to the erected blank, and by an arrangement for activating an adhesive substance on the inner part and/or the outer part for the purpose of joining these together, and in that said arrangement for activating and joining together comprises means which bring about pressure action between the inner part and the outer part and include an arrangement supplying pressure medium and/or an arrangement acting against a counterstay.

15. Production machine according to Claim 14, characterized in that said arrangement for activating and joining together comprises means which bring about sealing between the outer part and the inner part and also the counterstay surrounding these.
